# FASCICULE DE BREVET EUROPEEN

(11) **EP 4 308 880 B1**
(45) Date de publication et mention de la délivrance du brevet: **02.04.2025**
(21) Numéro de dépôt: 22707803.7
(22) Date de dépôt: 04.02.2022
(51) Int. Cl.: G01C 21/30

(54) **PROCEDE ET DISPOSITIF DE DETERMINATION D'UNE FIABILITE D'UNE CARTOGRAPHIE BASSE DEFINITION.**
VERFAHREN UND VORRICHTUNG ZUR BESTIMMUNG DER ZUVERLÄSSIGKEIT EINER KARTE MIT NIEDRIGER AUFLÖSUNG
METHOD AND DEVICE FOR DETERMINING THE RELIABILITY OF A LOW-DEFINITION MAP

(30) Priorité: 15.03.2021 FR 2102516
(43) Date de publication de la demande: 24.01.2024
(73) Titulaire: Stellantis Auto SAS, 78300 Poissy (FR)
(72) Inventeur: DESCHENES, Olivier, 92240 MALAKOFF (FR); REY, Alexis, 92210 ST CLOUD (FR); GAUTHIER, Pierre Clement, 51100 REIMS (FR); VIVET, Luc, 75016 PARIS 16 (FR); NID BOUHOU, Soumia, CASABLANCA, 20000 (MA)
(74) Mandataire: ESIP
(86) Numéro de dépôt international: PCT/FR2022/050217
(87) Numéro de publication internationale: WO 2022/195185

(56) Documents cités:
- EP-A2- 2 282 170
- CN-A- 111 767 354
- FR-A1- 3 082 349
- FR-A1- 3 090 547
- US-A1- 2007 299 606
- US-A1- 2019 227 545

## Description

La présente invention revendique la priorité de la demande française 2102516 déposée le 15.03.2021.

L'invention est dans le domaine des systèmes d'aide à la conduite de véhicule autonome. En particulier, l'invention concerne la détermination d'une fiabilité d'une cartographie basse définition pour fiabiliser l'activation d'au moins un système d'aide à la conduite d'un véhicule autonome.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Parmi les systèmes d'aide à la conduite, sont connus, par exemple, les dispositifs de maintien dans la voie, les dispositifs de changement de voie, les dispositifs de régulation de vitesse adaptative, ...

Un véhicule, comprenant un de ces dispositifs, comprend de nombreux capteurs comme une caméra, un RADAR, un LIDAR, des ultrasons, des accéléromètres, une centrale inertielle, des capteurs de position ou de localisation, des capteurs de vitesse, des capteurs d'accélération, ... Il est connu des traitements d'informations réalisées par au moins un calculateur embarqué dans le véhicule qui rendent apte à percevoir l'environnement. Par environnement, on entend l'extérieur et l'intérieur du véhicule. Cette perception de l'environnement rend apte une mesure d'une pente d'une route sur laquelle circule le véhicule et une détermination d'une trajectoire de la route sur laquelle circule véhicule. La détermination de la trajectoire de la route est par exemple la détermination des coefficients d'au moins un polynôme qui modélise la trajectoire de la route. Par exemple, la trajectoire est découpée en plusieurs segments ou plusieurs portions. Chaque segment ou portion est modélisé par un polynôme.

Par ailleurs ce véhicule comprend également un système de navigation qui comprend un moyen pour se localiser et une cartographie. Il existe différents types de cartographie. Une cartographie haute définition, dite cartographie HD, caractérise les voies et des attributs liés à la route comme un nombre de voie, des courbures de la route, une pente de la route, des signalisations routières, ... Par ailleurs, avec une cartographie HD, le système de navigation, qui est connecté avec des serveurs extérieurs au véhicule par des liaisons de télécommunication, met régulièrement à jour la cartographie. Ainsi, les attributs liés à la route sont ainsi très à jour. Par ailleurs, dans une cartographie HD, les attributs sont bien positionnés (résolution de 1 mètre).

Dans une cartographie SD, simple définition, la caractérisation des voies est moins précise et les attributs ne sont pas toujours bien numérisé (manque ou positionnement moins précise de l'ordre de plusieurs mètres). La cartographie est également moins régulièrement mise à jour. Si cette mise à jour est réalisée manuellement et annuellement à partir d'une base de données d'un fournisseur de cartographie, les données sont alors en moyennes datées de 6 mois.

On connait par le document FR3090547 un dispositif de vérification d'une carte haute définition d'un véhicule automobile. On connait par le document CN111767354 une méthode d'évaluation de précision cartographique de haute précision. On connait par le document FR3082349 un système d'assistance à la conduite, monté sur véhicule. On connait par le document US2019/227545 un dispositif et procédé d'assistance à la conduite de véhicule. On connait par le document US2007/299606 un système d'assistance d conduite. On connait par le document EP2282170 un dispositif de spécification de la fiabilité des informations utilisées pour une aide à la conduite.

Par une mise à jour régulière et une précision des attributs, une cartographie HD est intrinsèquement fiable. Ainsi, il est connu que des systèmes ADAS d'un véhicule comprenant une cartographie HD, utilisent les informations issues de la cartographie pour améliorer des fonctionnalités de ces systèmes ADAS. Par exemple, ces fonctionnalités sont aptes à agir sur la dynamique longitudinale et transversale du véhicule par une activation d'un système d'aide à la conduite (par exemple modifier une vitesse consigne, modifier un positionnement du véhicule dans la voie, ...). Malheureusement, le coût d'embarquer une cartographie HD est très élevé par rapport au prix de revient de fabrication d'un véhicule. Si le véhicule embarque une cartographe SD, il est dangereux de conditionner des activations ou des modifications de consignes de systèmes d'aide à la conduite qui agissent directement sur la direction et/ou sur la vitesse du véhicule. Une cartographie SD n'est pas assez fiable.

Afin d'utiliser des informations de la cartographie par un système d'aide à la conduite, il est connu des dispositifs calculant un indicateur instantané de fiabilité de la cartographie. En particulier, est utilisé la précision de localisation donnée par un dispositif de type GPS (de l'anglais « Global Positioning System »). Cependant, ces dispositifs calculant un indicateur instantané de fiabilité de la cartographie, d'une part, supposent que les informations pour calculer l'indicateur sont continuellement disponibles et, d'autre part, restent assez conceptuel dans la mise en œuvre. Malheureusement, la perception de l'environnement nécessite un fort volume d'information à traiter, et donc une forte charge de calculs. Ainsi dans certains cas d'usage (nombreux véhicules autour du véhicule autonome, fortes accélérations ou décélérations, ...) ou conditions météorologiques, certaines informations de perception sont régulièrement manquantes ou arrivent tardivement. Par ailleurs, les informations de perception issues d'un traitement d'image sont aussi régulièrement manquantes à cause de la visibilité disponible (par exemple, un camion peut cacher une signalisation routière en bord de voie). Ainsi, les calculs d'un indicateur instantané de fiabilité de la cartographie périodiquement lorsque le véhicule circule sur une route varient brusquement et aléatoirement. L'indicateur est alors instable, non fiable et inutilisable, pour des raisons de sécurité, dans des systèmes d'aides à la conduite.

Un objet de la présente invention est de remédier au problème précité, en particulier fiabiliser les informations, caractéristiques de la voie et attributs, issues d'une cartographie SD.

A cet effet, un premier aspect de l'invention concerne un procédé de détermination d'une fiabilité d'une cartographie basse définition pour fiabiliser l'activation d'au moins un système d'aide à la conduite d'un véhicule autonome, ledit véhicule autonome circulant sur une route et comprenant un système de navigation et un système de perception, le système de navigation comprenant la dite cartographie et fournissant au moins une pente et au moins une courbure de la route autour dudit véhicule, dites pente cartographiée et courbure cartographiée, le système de perception fournissant une pente et une trajectoire de la route autour dudit véhicule, dites pente mesurée et trajectoire mesurée, ledit procédé étant mis à jour périodiquement lorsque ledit véhicule circule sur la route et comportant les étapes de :
- Détermination d'une trajectoire de la route, dite trajectoire cartographiée, à partir de au moins la courbure cartographiée ;
- Détermination d'un indicateur de pente indiquant une concordance entre la pente cartographiée et la pente mesurée, l'indicateur de pente étant un nombre compris entre 0 et 1, la valeur 1 indiquant une forte concordance et la valeur 0 indiquant une absence de de concordance ;
- Détermination d'un indicateur de trajectoire indiquant une concordance entre la trajectoire cartographiée et la trajectoire mesurée, l'indicateur de trajectoire étant un nombre compris entre 0 et 1, la valeur 1 indiquant une forte concordance et la valeur 0 indiquant une absence de de concordance ;
- Calcul d'une valeur de corrélation à partir de l'indicateur de pente et de l'indicateur de trajectoire ;
- Détermination d'un indicateur de fiabilité de la cartographie, fiable ou non fiable, l'indicateur étant fiable si la valeur de corrélation est supérieure à un seuil prédéterminé.

Ainsi, s'il y a une bonne fiabilité cela signifie que les données cartographiées sont sensiblement égales aux données mesurées. Le système de navigation positionne alors bien le véhicule sur la cartographie, et, aussi, que la cartographie est localement fiable (de la distance de perception). Un système d'aide à la conduite qui pilote la dynamique longitudinale et/ou latérale du véhicule peut se fier aux données issues de la cartographie.

L'utilisation des deux indicateurs rend une mise à jour de la valeur de corrélation prédictive et réactive. Elle est prédictive grâce à l'indicateur de trajectoire qui se base sur une vision lointaine du système de perception (entre 30 et 300 mètres par exemple). Elle est réactive grâce à l'indicateur de pente qui se base sur un vison très rapproché du véhicule, la mesure de la pente n'est connue que là où circule, ou a circulé, le véhicule.

Par ailleurs, la fiabilité est robuste aussi aux courtes erreurs aléatoires de détection et de localisation à cause d'une surcharge de calculs. Cette robustesse est due au calcul de la valeur de corrélation et à une détermination par niveau.

Avantageusement, la détermination de l'indicateur de fiabilité de la cartographie est sur quatre niveaux - forte, moyenne, insuffisante ou indéfinie - les niveaux étant définis en fonction de la valeur de corrélation.

Ainsi, si précédemment une bonne fiabilité a été déterminée, puis si la valeur de corrélation diminue en absence de trajectoire ou pente cartographiée et/ou mesurée, on ne passe pas directement à une fiabilité insuffisante ou indéfinie, ce qui risque d'arrêter brusquement une aide à la conduite.

Avantageusement, l'indicateur de pente croît ou décroit selon un gradient calculé, le gradient étant fonction de l'écart entre la pente cartographiée et la pente mesurée.

Ainsi, l'historique est pris en compte si précédemment une bonne fiabilité a été déterminée, puis si l'indicateur de pente diminue on ne passe pas directement à une faible fiabilité ou incohérence indéterminée, ce qui risque d'arrêter brusquement une aide à la conduite.

Avantageusement, l'indicateur de trajectoire croît ou décroit selon un gradient calculé, le gradient étant fonction de l'écart latérale entre la trajectoire cartographiée et la trajectoire mesurée.

Ainsi, l'historique est pris en compte si précédemment une bonne fiabilité a été déterminée, puis si l'indicateur de trajectoire diminue on ne passe pas directement à une faible fiabilité ou incohérence indéterminée, ce qui risque d'arrêter brusquement une aide à la conduite.

Avantageusement, la valeur de corrélation est une pondération entre l'indicateur de pente et l'indicateur de trajectoire.

Avantageusement, la détermination de la trajectoire cartographiée est obtenue à partir d'interpolation de la au moins une courbure cartographiée.

Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un dispositif, selon un exemple particulier de réalisation de la présente invention.
[Fig. 2] illustre schématiquement un procédé de détermination d'une fiabilité d'une cartographie basse définition, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

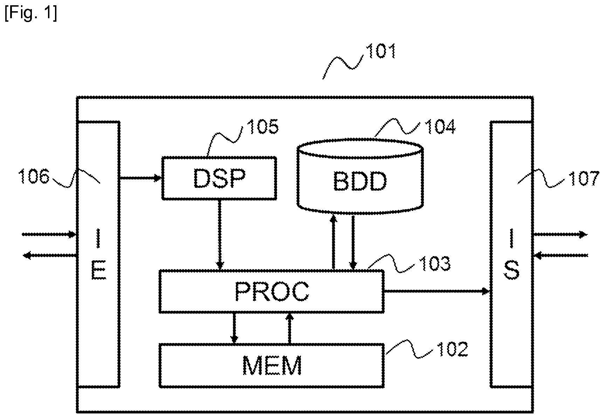

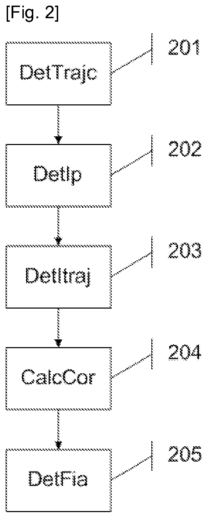

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

La figure 2 illustre schématiquement un procédé de détermination d'une fiabilité d'une cartographie basse définition, selon un exemple particulier de réalisation de la présente invention.

Le procédé est mis en œuvre par un dispositif 101 dans un véhicule autonome qui comprend au moins un système d'aide à la conduite. Ledit véhicule autonome circule sur une route et comprend un système de navigation et un système de perception.

Ledit système de navigation comprend ladite cartographie et fournit au moins une pente et au moins une courbure de la route autour dudit véhicule, dites pente cartographiée et courbure cartographiée. Ledit système de perception fournit une pente et une trajectoire de la route autour dudit véhicule, dites pente mesurée et trajectoire mesurée.

Lorsque le véhicule circule, ledit procédé est mis jour à périodiquement, par exemple toutes les 100 ms, mais une autre valeur est possible. Dans un mode de réalisation, la mise à jour est également faite sur un évènement détecté ou sur une demande d'un des systèmes d'aide à la conduite.

L'étape 201, DetTrajc, est une étape de détermination d'une trajectoire de la route, dite trajectoire cartographiée, à partir de la au moins la courbure cartographiée. Dans un mode opératoire préféré, le système de navigation fourni des informations autour du véhicule dans un horizon couvrant, par exemple, de 3000 mètres devant le véhicule à -500 mètres (donc derrière le véhicule). Sur cet horizon, la cartographie est découpée en segments. Chaque segment représente une portion de la route sur laquelle circule le véhicule. Une portion comprend donc une distance. La au moins courbure cartographiée correspond à une courbure par segment ainsi que la longueur du segment. Mis bout à bout, l'ensemble des segments représente la route sur laquelle circule véhicule un l'horizon donné.

Ainsi, à partir des courbures de chaque segment, une trajectoire de la route, dite trajectoire cartographiée, est déterminée. Cette détermination est réalisée, par exemple, par la détermination d'un polynôme calculée à partir des données de la au moins courbure cartographiée. Dans un autre exemple, cette détermination est obtenue à partir d'interpolation de la au moins une courbure cartographiée.

L'étape 2020, Detlp, est une étape de détermination d'un indicateur de pente indiquant une concordance entre la pente cartographiée et la pente mesurée, l'indicateur de pente étant un nombre compris entre 0 et 1, la valeur 1 indiquant une forte concordance et la valeur 0 indiquant une absence de de concordance.

Dans un mode opératoire, si l'écart absolu et/ou relatif entre la pente cartographiée, pente fourni par le système de navigation à l'endroit où circule le véhicule, et la pente mesurée est inférieur à un seuil prédéterminé, alors l'indicateur de pente vaut 1, sinon l'indicateur de pente vaut 0.

Dans un mode opératoire préféré, l'indicateur de pente croît ou décroit selon un gradient calculé, le gradient étant fonction de l'écart entre la pente cartographiée et la pente mesurée. Le gradient est un nombre compris entre -1 et 1. En fonction de l'écart, une valeur de gradient est choisie. Par exemple si l'écart est inférieur à un seuil, le gradient est égal à 0,002, sinon, le gradient est égal à -0,002. Ainsi, à chaque période, l'indicateur de pente est mis à jour en prenant donc en compte l'historique ce qui assure une robustesse aux erreurs aléatoires de mesures et/ou aux erreurs et/ou imprécisions de la cartographie.

Dans un autre mode opératoire, le gradient est également fonction de la variation de la pente mesurée. En cas de forte accélération ou décélération, la pente mesurée est temporairement plus fortement entachée d'erreurs. Par exemple, le gradient est égal à 0,004 si la variation de la pente est inférieure à un autre seuil prédéterminé et si l'écart entre la pente cartographiée et la pente mesurée est inférieure à un seuil prédéterminé.

L'étape 203, Detltraj, est une étape de détermination d'un indicateur de trajectoire indiquant une concordance entre la trajectoire cartographiée et la trajectoire mesurée, l'indicateur de trajectoire étant un nombre compris entre 0 et 1, la valeur 1 indiquant une forte concordance et la valeur 0 indiquant une absence de de concordance.

Dans un mode opératoire, si l'écart latérale absolu et/ou relatif entre la trajectoire cartographiée et la trajectoire mesurée est inférieur à un seuil prédéterminé, alors l'indicateur de pente vaut 1, sinon l'indicateur de pente vaut 0.

Dans un mode opératoire préféré, l'indicateur de trajectoire croît ou décroit selon un gradient calculé, le gradient étant fonction de l'écart latérale entre la trajectoire cartographiée et la trajectoire mesurée. Le gradient est un nombre compris entre -1 et 1. En fonction de l'écart, une valeur de gradient est choisie. Par exemple si l'écart est inférieur à un seuil, le gradient est égal à 0,002, sinon, le gradient est égal à - 0,002. Ainsi, à chaque période, l'indicateur de trajectoire est mis à jour en prenant donc en compte l'historique ce qui assure une robustesse aux erreurs aléatoires de mesures et/ou aux erreurs et/ou imprécisions de la cartographie.

Dans un autre mode opératoire, le gradient est fonction d'une combinaison de l'écart entre la trajectoire cartographiée et la trajectoire mesurée pour chaque segment. Plus le nombre d'écart inférieur à un seuil est grand plus le gradient est élevé.

L'étape 204, CalcCor, est une étape de calcul d'une valeur de corrélation à partir de l'indicateur de pente et de l'indicateur de trajectoire. Avantageusement, la valeur de corrélation est une pondération entre l'indicateur de pente et l'indicateur de trajectoire. La valeur de corrélation est un nombre compris entre 0 et 1. Par exemple, la valeur de corrélation est égale à 40% de l'indicateur de pente additionné à 60% de l'indicateur de trajectoire. Les pourcentages donnés sont à titre d'exemple, d'autre valeur sont possible. Idéalement, le pourcentage de l'indicateur de pente est inférieur à l'indicateur de trajectoire, l'indicateur de trajectoire étant plus robuste. Le pourcentage peut être également fonction d'autres paramètres, comme sur au moins un seuil de la variation de la pente mesurée.

L'étape 205, DetFia, est une étape de détermination d'un indicateur de fiabilité de la cartographie, fiable ou non fiable, l'indicateur étant fiable si la valeur de corrélation est supérieure à un seuil prédéterminé. Avantageusement, la détermination de l'indicateur de fiabilité de la cartographie est sur quatre niveaux - forte, moyenne, insuffisante ou indéfinie - les niveaux étant définis en fonction de la valeur de corrélation. Si l'indicateur de trajectoire et l'indicateur de pente varient selon un gradient, l'historique est pris en compte. Ainsi, si la valeur de corrélation est proche de 1 cela signifie que pendant une durée de plusieurs dizaines de secondes les indicateurs de pente et de trajectoire sont proches de 1 et que donc qu'il y a une très bonne concordance entre la cartographie et l'environnement. La cartographie est donc fiable et elle sera certainement fiable sur les prochaines dizaines de secondes même s'il y a des fortes accélérations/décélérations du véhicule qui dégrade les mesures de la pente, et s'il des mouvements de volant pour faire un évitement qui perturbent la détermination de la trajectoire mesurée par le dispositif de perception.

La présente invention ne se limite pas aux formes de réalisation décrites ci-avant à titre d'exemples ; elle s'étend à d'autres variantes. Par exemple, des valeurs numériques ont été données en particulier pour les gradients. D'autres valeurs sont possibles et dépendent, par exemple de la période d'actualisation de la procédure.

## Revendications

1. Procédé de détermination d'une fiabilité d'une cartographie basse définition pour fiabiliser l'activation d'au moins un système d'aide à la conduite d'un véhicule autonome, ledit véhicule autonome circulant sur une route et comprenant un système de navigation et un système de perception, le système de navigation comprenant la dite cartographie et fournissant au moins une pente et au moins une courbure de la route autour dudit véhicule, dites pente cartographiée et courbure cartographiée, le système de perception fournissant une pente et une trajectoire de la route autour dudit véhicule, dites pente mesurée et trajectoire mesurée,
ledit procédé étant **caractérisé en ce que**
ledit procédé est mis à jour périodiquement lorsque ledit véhicule circule sur la route et comporte les étapes de :
• Détermination (201) d'une trajectoire de la route, dite trajectoire cartographiée, à partir de au moins la courbure cartographiée ;
• Détermination (202) d'un indicateur de pente indiquant une concordance entre la pente cartographiée et la pente mesurée, l'indicateur de pente étant un nombre compris entre 0 et 1, la valeur 1 indiquant une forte concordance et la valeur 0 indiquant une absence de de concordance ;
• Détermination (203) d'un indicateur de trajectoire indiquant une concordance entre la trajectoire cartographiée et la trajectoire mesurée, l'indicateur de trajectoire étant un nombre compris entre 0 et 1, la valeur 1 indiquant une forte concordance et la valeur 0 indiquant une absence de de concordance ;
• Calcul (204) d'une valeur de corrélation à partir de l'indicateur de pente et de l'indicateur de trajectoire ;
• Détermination (205) d'un indicateur de fiabilité de la cartographie, fiable ou non fiable, l'indicateur étant fiable si la valeur de corrélation est supérieure à un seuil prédéterminé.

2. Procédé selon la revendication 1, dans lequel la détermination (205) de l'indicateur de fiabilité de la cartographie est sur quatre niveaux - forte, moyenne, insuffisante ou indéfinie - les niveaux étant définis en fonction de la valeur de corrélation.

3. Procédé selon l'une des revendications précédentes, dans lequel l'indicateur de pente croît ou décroit selon un gradient calculé, le gradient étant fonction de l'écart entre la pente cartographiée et la pente mesurée.

4. Procédé selon l'une des revendications précédentes, dans lequel l'indicateur de trajectoire croît ou décroit selon un gradient calculé, le gradient étant fonction de l'écart latérale entre la trajectoire cartographiée et la trajectoire mesurée.

5. Procédé selon l'une des revendications précédentes, dans lequel la valeur de corrélation est une pondération entre l'indicateur de pente et l'indicateur de trajectoire.

6. Procédé selon l'une des revendications précédentes, dans lequel la détermination de la trajectoire cartographiée est obtenue à partir d'interpolation de la au moins une courbure cartographiée.

7. Dispositif (101) comprenant une mémoire (102) associée à au moins un processeur (103) configuré pour mettre en œuvre le procédé selon l'une des revendications précédentes.

8. Véhicule comportant le dispositif selon la revendication précédente.

9. Programme d'ordinateur comprenant des instructions adaptées pour l'exécution des étapes du procédé selon l'une des revendications 1 à 6 lorsque ledit programme est exécuté par au moins un processeur (103).

## Patentansprüche

1. Verfahren zum Bestimmen der Zuverlässigkeit einer niedrig aufgelösten Kartographie, um die Aktivierung mindestens eines Fahrerassistenzsystems eines autonomen Fahrzeugs zu verlässlichen, wobei das autonome Fahrzeug auf einer Straße fährt und ein Navigationssystem und ein Wahrnehmungssystem umfasst, wobei das Navigationssystem die Kartographie umfasst und mindestens eine Steigung und mindestens eine Krümmung der Straße um das Fahrzeug liefert, wobei die Steigung kartografiert und die Krümmung kartografiert ist, wobei das Wahrnehmungssystem eine Steigung und eine Bahn der Straße um das Fahrzeug liefert, wobei die Steigung gemessen und die Bahn gemessen wird, wobei das Verfahren **dadurch gekennzeichnet ist, dass** es durchgeführt wird regelmäßig zu aktualisieren, wenn das Fahrzeug auf der Straße fährt, und die folgenden Schritte durchzuführen:
· Bestimmung (201) einer so genannten kartografischen Fahrspur, ausgehend von mindestens der kartografischen Krümmung;
· Bestimmung (202) eines Neigungsindikators, der eine Übereinstimmung zwischen der abgebildeten Neigung und der gemessenen Neigung anzeigt, wobei der Neigungsindikator eine Zahl zwischen 0 und 1 ist und der Wert 1 eine starke Übereinstimmung anzeigt und der Wert 0 eine Nichtübereinstimmung anzeigt;
· Bestimmung (203) eines Flugwegindikators, der eine Übereinstimmung zwischen der abgebildeten Flugbahn und der gemessenen Flugbahn anzeigt, wobei der Flugwegindikator eine Zahl zwischen 0 und 1 ist und der Wert 1 eine starke Übereinstimmung anzeigt und der Wert 0 eine fehlende Übereinstimmung anzeigt;
· Berechnung (204) eines Korrelationswerts aus dem Steigungsindikator und dem Flugwegindikator;
· Bestimmung (205) eines zuverlässigen oder unzuverlässigen Indikators für die Zuverlässigkeit der Abbildung, wobei der Indikator zuverlässig ist, wenn der Korrelationswert einen vorgegebenen Schwellenwert überschreitet.

2. Verfahren nach Anspruch 1, bei dem die Bestimmung (205) des Zuverlässigkeitsindikators der Abbildung auf vier Ebenen erfolgt - stark, mittel, unzureichend oder undefiniert - wobei die Ebenen in Abhängigkeit von dem Korrelationswert definiert werden.

3. Verfahren nach einem der vorhergehenden Ansprüche, bei dem der Steigungsindikator gemäß einem berechneten Gradienten zunimmt oder abnimmt, wobei der Gradient eine Funktion der Abweichung zwischen der kartierten Steigung und der gemessenen Steigung ist.

4. Verfahren nach einem der vorhergehenden Ansprüche, bei dem der Flugwegindikator gemäß einem berechneten Gradienten zunimmt oder abnimmt, wobei der Gradient eine Funktion der seitlichen Abweichung zwischen der abgebildeten Flugbahn und der gemessenen Flugbahn ist.

5. Verfahren nach einem der vorhergehenden Ansprüche, bei dem der Korrelationswert eine Gewichtung zwischen dem Steigungsindikator und dem Pfadindikator ist.

6. Verfahren nach einem der vorhergehenden Ansprüche, bei dem die Bestimmung der abgebildeten Bahn aus einer Interpolation der wenigstens einen abgebildeten Krümmung erhalten wird.

7. Vorrichtung (101) mit einem Speicher (102), der mindestens einem Prozessor (103) zugeordnet ist, der so konfiguriert ist, dass er das Verfahren nach einem der vorhergehenden Ansprüche ausführt.

8. Fahrzeug mit der Vorrichtung nach dem vorhergehenden Anspruch.

9. Computerprogramm mit Befehlen, die zur Ausführung der Schritte des Verfahrens nach einem der Ansprüche 1 bis 6 angepasst sind, wenn das Programm von mindestens einem Prozessor (103) ausgeführt wird.

## Claims

1. A method of determining the reliability of a low resolution cartography to reliably activate at least one driver assistance system of an autonomous vehicle, the autonomous vehicle traveling on a road and comprising a navigation system and a perception system, the navigation system comprising the cartography and providing at least one slope and at least one curvature of the road around the vehicle, the slope being mapped and the curvature being mapped, the perception system providing a slope and a path of the road around the vehicle, the slope being measured and the path being measured, the method being **characterized in that** it is performed to regularly update when the vehicle is traveling on the road, and to perform the following steps:
· Determination (201) of a so-called cartographic lane, starting from at least the cartographic curvature;
· Determination (202) of an inclination indicator indicating a match between the inclination imaged and the measured inclination, wherein the inclination indicator is a number between 0 and 1 and the value 1 indicates a strong match and the value 0 indicates a non-match;
· Determination (203) of a trajectory indicator indicating a match between the trajectory imaged and the trajectory measured, wherein the trajectory indicator is a number between 0 and 1 and the value 1 indicates a strong match and the value 0 indicates a mismatch;
· Calculation (204) of a correlation value from the slope indicator and the trajectory indicator;
· Determination (205) of a reliable or unreliable indicator of the reliability of the mapping, the indicator being reliable if the correlation value exceeds a predetermined threshold value.

2. Method according to Claim 1, in which the determination (205) of the reliability indicator of the image is carried out on four levels - strong, medium, inadequate or undefined - the levels being defined as a function of the correlation value.

3. A method as claimed in any preceding claim, wherein the slope indicator increases or decreases according to a calculated gradient, the gradient being a function of the deviation between the mapped slope and the measured slope.

4. A method as claimed in any preceding claim, wherein the trajectory indicator increases or decreases according to a calculated gradient, the gradient being a function of the lateral deviation between the imaged trajectory and the measured trajectory.

5. A method as claimed in any preceding claim, wherein the correlation value is a weight between the slope indicator and the path indicator.

6. A method as claimed in any preceding claim, wherein the determination of the imaged path is obtained from interpolation of the at least one imaged curvature.

7. Apparatus (101) comprising a memory (102) associated with at least one processor (103) configured to perform the method of any preceding claim.

8. A vehicle comprising the device according to the preceding claim.

9. A computer program comprising instructions adapted to perform the steps of the method of any one of claims 1 to 6 when the program is executed by at least one processor (103).
